# EUROPÄISCHE PATENTSCHRIFT

(11) **EP 3 120 740 B1**
(45) Veröffentlichungstag und Bekanntmachung des Hinweises auf die Patenterteilung: **19.09.2018**
(21) Anmeldenummer: 16179467.2
(22) Anmeldetag: 14.07.2016
(51) Int. Cl.: A47J 31/44

(54) **HEISSGETRÄNKEZUBEREITUNGSVORRICHTUNG, INSBESONDERE KAFFEEVOLLAUTOMAT**
HOT BEVERAGE PREPARATION DEVICE, IN PARTICULAR A FULLY AUTOMATIC COFFEE MAKER
DISPOSITIF DE PRÉPARATION DE BOISSONS CHAUDES, EN PARTICULIER MACHINE À CAFÉ ENTIÈREMENT AUTOMATIQUE

(30) Priorität: 24.07.2015 DE 102015214097
(43) Veröffentlichungstag der Anmeldung: 25.01.2017
(73) Patentinhaber: BSH Hausgeräte GmbH, 81739 München (DE)
(72) Erfinder: Ebner, Christoph, 83313 Siegsdorf (DE); Grimme, Thomas, 83512 Wasserburg (DE); Koch, Franz, 83454 Anger (DE)

(56) Entgegenhaltungen:
- WO-A1-2011/086088
- WO-A1-2016/015127
- GB-A- 2 455 330

## Beschreibung

Die Erfindung betrifft eine Heißgetränkezubereitungsvorrichtung, insbesondere einen Kaffeevollautomaten, mit welchem insbesondere Heißgetränke oder heiße flüssige Lebensmittel, wie beispielsweise Kaffee, Tee, heiße Milch, Kakaogetränke oder auch Suppen zubereitet werden können.

Nachfolgend werden die Begriffe "Heißgetränkezubereitungsvorrichtung", "Kaffeevollautomat" und "KVA" gleichbedeutend benutzt, so dass einer dieser Begriffe stets die anderen beinhaltet und sie daher gegeneinander austauschbar sind.

Die WO 2011 / 086 088 zeigt eine Kapsel-Kaffeemaschine, bei welcher ein Betreiben einer Kapselbrüheinheit verhindert wird, wenn ein Kapselauffangbehälter nicht in die Kapsel-Kaffeemaschine eingesetzt ist.

Die GB 2 455 330 beschreibt eine Flüssigkeits-Heiz-Vorrichtung, bei der ein Verriegelungssystem für einen verschließbaren Deckel eines Flüssigkeitsbehälters, beispielsweise eines Wasserbehälters, Anwendung findet. Das Verriegelungssystem öffnet dabei den Deckel des Flüssigkeitsbehälters automatisch, sobald ein Schwimmer aufgrund des geringen Wasserstandes einen vorbestimmten Tiefstand erreicht.

Aufgabe der vorliegenden Erfindung ist es daher, eine Heißgetränkezubereitungsvorrichtung mit einem weniger komplexen Sicherungsmechanismus bereitzustellen.

Diese Aufgabe wird erfindungsgemäß durch eine Heißgetränkezubereitungsvorrichtung mit den Merkmalen des unabhängigen Patentanspruchs 1 gelöst.

Demgemäß ist eine Heißgetränkezubereitungsvorrichtung, mit einem beweglichen Funktionselement vorgesehen, welches eine Ruheposition und eine Betriebsposition aufweist, mit einem Gehäuse, welches zumindest das bewegliche Funktionselement umschließt, mit einem beweglichen Gehäuseelement, welches in einer Außenwand des Gehäuses angeordnet ist und dazu ausgebildet ist, in einem ersten, geöffneten Zustand einen Zugang zu dem beweglichen Funktionselement freizugeben und in einem zweiten, geschlossenen Zustand den Zugang zu dem beweglichen Funktionselement zu versperren, und mit einer Verriegelungseinrichtung, welche dazu ausgebildet ist, in einer ersten Position (Verriegelungsposition) das bewegliche Gehäuseelement zu verriegeln und in einer zweiten Position (Freigabeposition) das bewegliche Gehäuseelement freizugeben, und welche derart gegenüber dem beweglichen Funktionselement angeordnet ist, dass das bewegliche Funktionselement in der Ruheposition die Verriegelungseinrichtung in die zweite Position bewegt bzw. in der zweiten Position hält.

Die Heißgetränkezubereitungseinrichtung kann eine Kapselmaschine oder insbesondere ein Kaffeevollautomat sein, Bei dem beweglichen Gehäuseelement kann es sich um so gut wie jede benutzerseitig bedienbare Öffnung in der Außenwand des Gehäuses handeln, also beispielsweise um eine Restwasserschale oder eine Gerätetür. Als bewegbares, insbesondere maschinenseitig angetriebenes Funktionselement kann ein nahezu beliebiger beweglicher Bestandteil beispielsweise einer Brüheinheit dienen, zum Beispiel eine verfahrbare und/oder verschwenkbare Brühkammer, ein Brüheinheitenantrieb oder ein Keramikventil. Um Fehlfunktionen zu vermeiden oder Verletzungen eines Benutzers zu verhindern, werden ein Öffnen des Gehäuses und insbesondere ein Zugang zu einer Brüheinheit eines Kaffeevollautomaten üblicherweise überwacht. Fehlt die Restwasserschale oder ist die Servicetür geöffnet, wird der Betrieb der Zubereitungseinrichtung verhindert. Das Funktionselement weist mit der Betriebsposition und der Ruheposition zwei voneinander verschiedene Positionen auf, die es während eines Zubereitungsvorgangs einnimmt. Dabei muss die Ruheposition keine Inaktivität des Funktionselements bedeuten, sondern im Gegensatz zur Betriebsposition jedenfalls eine gefahrlose Manipulation durch den Benutzer erlauben. Sie ist es außerdem, die vorzugsweise über eine zumindest zeitweise mechanische Koppelung des beweglichen Funktionselements und der Verriegelungseinrichtung deren Freigabeposition bewirkt.

Der vorliegenden Erfindung liegt die Erkenntnis zugrunde, dass eine aktive Überwachung des Zustands z. B. der Brüheinheit bzw. einer Servicetür einer Heißgetränkezubereitungsvorrichtung nicht zwingend nötig ist. Die Erfindung nutzt diese Erkenntnis, um eine Heißgetränkezubereitungsvorrichtung bereitzustellen, bei welcher auf rein mechanische Art das Öffnen eines beweglichen Gehäuseelements unterbunden wird, wenn sich das bewegliche Funktionselement außerhalb der bzw. in einer anderen als der dafür geeigneten Ruheposition befindet. Dazu wird eine Verriegelungseinrichtung genutzt, die das bewegliche Gehäuseelement mechanisch gegen ein Öffnen verriegelt, wenn sich das bewegliche Funktionselement nicht in der Ruheposition befindet.

Je nach Funktion des beweglichen Funktionselements kann es in seiner Betriebsposition z. B. heiße Flüssigkeiten enthalten oder verarbeiten bzw. unter Druck stehen oder dergleichen und damit bei einer Fehlbetätigung eine Gefahr für den Benutzer darstellen. Erfindungsgemäß kann folglich auf rein mechanische Weise und ohne den Einsatz elektrischer Bauelemente insbesondere verhindert werden, dass ein Benutzer der Heißgetränkezubereitungsvorrichtung das Gehäuse öffnet, während das bewegliche Funktionselement sich in der Betriebsposition befindet und eventuell eine Gefährdung des Benutzer darstellen könnte, und/oder dass er mit heißen Komponenten oder mit Heißdampf in Berührung kommt. Dazu nutzt die Erfindung eine ohnehin stattfindende Bewegung des Funktionselements, um die Verriegelungseinrichtung zu betätigen. Da die Erfindung auf den Einsatz elektrischer oder elektronischer Elemente verzichtet, kann die Komplexität und damit die Fehleranfälligkeit der Heißgetränkezubereitungsvorrichtung reduziert werden.

Weitere, besonders vorteilhafte Ausgestaltungen und Weiterbildungen der Erfindung ergeben sich aus den abhängigen Ansprüchen sowie der nachfolgenden Beschreibung, wobei die Merkmale verschiedener Ausführungsbeispiele zu neuen Ausführungsbeispielen kombiniert werden können.

In einer vorteilhaften Ausführungsform kann die Verriegelungseinrichtung eine Federeinrichtung aufweisen, welche dazu ausgebildet ist, die Verriegelungseinrichtung in die erste Position zu bewegen, wenn sich das bewegliche Funktionselement nicht in der Ruheposition befindet. D.h. dass die Verriegelungseinrichtung selbstschließend bzw. selbstverriegelnd ausgeführt ist, indem es in die Verriegelungsposition vorgespannt ist. Dazu kann das Federelement als Schraubenfeder, Tellerfeder, Blattfeder oder dergleichen ein Abschnitt der Verriegelungseinrichtung selbst in sich elastisch ausgeführt sein. Bei dieser Ausführungsform ist keine aktive Ansteuerung des beweglichen Funktionselements notwendig, um die Verriegelungsfunktion zu aktivieren.

In einer weiteren vorteilhaften Ausführungsform kann die Verriegelungseinrichtung dazu ausgebildet sein, in einer dritten Position (Blockadeposition) das bewegliche Funktionselement derart zu blockieren, dass es nicht von der Ruheposition in die Betriebsposition bewegt werden kann, und zugleich oder alternativ das bewegliche Gehäuseelement derart zu blockieren, dass es nicht von dem ersten, geöffneten Zustand in den zweiten, geschlossenen Zustand bewegt werden kann. Dadurch wird es einerseits möglich zu verhindern, dass bei geöffnetem Gehäuse das bewegliche Funktionselement in die Betriebsposition bewegt wird und ein Getränkebezug begonnen wird, andererseits wird es möglich, z.B. bei entferntem Funktionselement ein Schließen des Gehäuses zu verhindern.

In einer weiteren vorteilhaften Ausführungsform kann die Federeinrichtung dazu ausgebildet sein, die Verriegelungseinrichtung in die dritte Position bzw. die Blockadeposition zu bewegen, wenn sich das bewegliche Gehäuseelement in dem ersten, geöffneten Zustand befindet und sich das bewegliche Funktionselement in einer anderen als in der Ruheposition befindet. Wird auch die dritte Position bzw. die Blockadeposition durch die Verriegelungseinrichtung selbsttätig eingenommen, ist weder Kontakt zu dem beweglichen Funktionselement noch zu dem beweglichen Gehäuseelement notwendig, um die Verriegelungseinrichtung in die Blockadeposition zu bewegen. Folglich kann die Blockadeposition durch die Verriegelungseinrichtung auch bei entferntem beweglichen Funktionselement und geöffnetem Gehäuse eingenommen werden. Die Verriegelungseinrichtung kann folglich ihre Blockadeposition insbesondere dann einnehmen und einen Betrieb der Zubereitungseinrichtung dann sperren, wenn beispielsweise eine Brüheinheit oder eine Restwasserschale entnommen und ggf. zusätzlich das Gerätegehäuse noch nicht geschlossen ist. Dadurch kann die Zubereitungseinrichtung eine höhere Betriebssicherheit bieten.

In einer weiteren vorteilhaften Ausführungsform kann die Verriegelungseinrichtung ein Sperrelement aufweisen, welches dazu ausgebildet ist, in der ersten Position eine Bewegung des beweglichen Gehäuseelements in den ersten, geöffneten Zustand zu verhindern, und welches dazu ausgebildet ist, in der dritten Position bzw. in der Blockadeposition eine Bewegung des beweglichen Gehäuseelements in den zweiten, geschlossenen Zustand zu verhindern, wobei das Sperrelement dazu ausgebildet ist, in der zweiten Position eine Bewegung des beweglichen Gehäuseelements von dem geöffneten Zustand in den geschlossenen Zustand und umgekehrt freizugeben. Das Sperrelement kann z. B. als ein Stift ausgebildet sein, der in eine Ausnehmung des beweglichen Gehäuseelements, etwa in ein entsprechendes Loch in dem beweglichen Gehäuseelement eingreift und so z. B. ein Verschieben des beweglichen Gehäuseelements insbesondere quer zu der Achse des Stifts verhindert. Das Sperrelement kann z. B. auch Haken-förmig ausgebildet sein und in eine Art Öse in dem beweglichen Gehäuseelement eingreifen. Dadurch kann das beweglichen Gehäuseelement nicht nur gegen ein Verschieben sondern auch gegen andere Bewegungen, z. B. ein Aufschwingen oder dergleichen, gesichert werden. In der dritten Position bzw. in der Blockadeposition kann das Sperrelement z. B. in den Bereich des Gehäuses ragen, an welchem sich in dem zweiten, geschlossenen Zustand das bewegliche Gehäuseelement befindet. Auf diese Art kann das Sperrelement in der Blockadeposition ein Schließen des Gehäuses verhindern.

In einer weiteren vorteilhaften Ausführungsform kann die Verriegelungseinrichtung ein schwenkbar gelagertes Betätigungselement aufweisen, das gelenkig mit dem Sperrelement gekoppelt ist und bei einer Bewegung des beweglichen Funktionselements in die Ruheposition derart betätigt wird, dass es das Sperrelement in die zweite Position bewegt. Aus Platzgründen kann das Betätigungselement beispielsweise einen ersten Arm und einen mit dem ersten Arm in einem vorgegebenen Winkel, insbesondere einem 90° Winkel, gekoppelten zweiten Arm aufweisen, der gelenkig mit dem Sperrelement gekoppelt ist. Der erste Arm kann durch das bewegliche Funktionselement betätigbar sein und bei Betätigung das Sperrelement über den zweiten Arm in die zweite Position bewegen. Dadurch kann eine sehr einfache Betätigung der Verriegelungseinrichtung ermöglicht werden, die lediglich das Sperrelement, das Betätigungselement und eine Federeinrichtung aufweisen muss.

In einer weiteren vorteilhaften Ausführungsform kann die Heißgetränkezubereitungsvorrichtung einen Sensor zur Erfassung der Betriebsposition des Funktionselements aufweisen. Er ist also dazu ausgebildet zu erkennen, ob sich das bewegliche Funktionselement in der Betriebsposition befindet. Ferner kann die Heißgetränkezubereitungsvorrichtung eine Steuereinrichtung aufweisen, welche mit dem Sensor gekoppelt ist, und dazu ausgebildet ist, einen Getränkebezug nur dann freizugeben, wenn sich das bewegliche Funktionselement in der Betriebsposition befindet. Der Sensor kann z.B. ein kontaktloser Positionssensor, ein Mikroschalter oder dergleichen sein. Alternativ kann der Sensor aber auch ein Stromsensor sein. Wird bei der Bewegung des beweglichen Funktionselements ein erhöhter Stromverbrauch des Motors erkannt, ohne dass das bewegliche Funktionselement die gewünschte Position erreicht hat, kann davon ausgegangen werden, dass eine Bewegung des beweglichen Funktionselements blockiert wird.

In einer weiteren vorteilhaften Ausführungsform kann die Heißgetränkezubereitungsvorrichtung einen elektrisch steuerbaren Aktor aufweisen. Er kann das bewegliche Funktionselement von der Ruheposition in die Betriebsposition bewegen und umgekehrt. Die Steuervorrichtung kann ferner mit dem Aktor und dem Sensor gekoppelt sein und den Aktor derart ansteuern, dass er das bewegliche Funktionselement von der Ruheposition in die Betriebsposition bewegt, um einen Getränkebezug einzuleiten. Ferner kann die Steuervorrichtung basierend auf von dem Sensor erfassten Größen detektieren, ob das bewegliche Funktionselement die Betriebsposition erreicht. Erreicht es die Betriebsposition nicht oder nicht innerhalb einer vorgegebenen Zeit, kann die Steuervorrichtung einen Getränkebezug beenden. Auf diese Art kann die Steuereinrichtung sehr einfach erkennen, dass das bewegliche Gehäuseelement nicht in dem zweiten, geschlossenen Zustand ist, und einen Getränkebezug abbrechen.

In einer weiteren vorteilhaften Ausführungsform kann die Heißgetränkezubereitungsvorrichtung eine Brüheinheit, insbesondere eine Spindelbrüheinheit, als bewegliches Funktionselement und/oder eine Servicetür als bewegliches Gehäuseelement aufweisen. Die Kombination der vorliegenden Erfindung mit der Brüheinheit und der Servicetür ermöglicht eine sehr einfache Absicherung der Servicetür.

Die obigen Ausgestaltungen und Weiterbildungen können sich, sofern sinnvoll, beliebig miteinander kombinieren lassen. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden unter Hinweis auf die beigefügten Figuren anhand von Ausführungsbeispielen noch näher erläutert. Dabei sind in den verschiedenen Figuren gleiche Komponenten mit identischen Bezugsziffern versehen. Es zeigen:
- Figur 1:: eine schematische Darstellung einer Ausführungsform der erfindungsgemäßen Heißgetränkezubereitungsvorrichtung in einem ersten Zustand,
- Figur 2:: eine schematische Darstellung einer Ausführungsform der erfindungsgemäßen Heißgetränkezubereitungsvorrichtung der Figur 1 in einem zweiten Zustand, und
- Figur 3:: eine schematische Darstellung einer weiteren Ausführungsform der erfindungsgemäßen Heißgetränkezubereitungsvorrichtung.

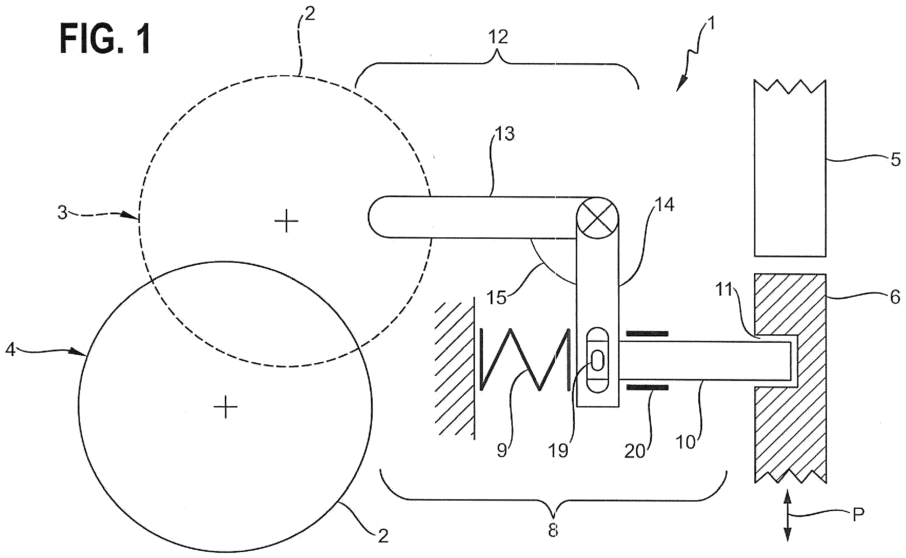

Die lediglich ausschnittsweise dargestellte Heißgetränkezubereitungsvorrichtung 1 der Figur 1 weist ein als Brüheinheit ausgebildetes bewegliches Funktionselement 2 auf, welches sich in einer Betriebsposition 4 befindet. Eine Ruheposition 3 der Brüheinheit 2 ist gestrichelt eingezeichnet. Neben der Brüheinheit 2 ist die Verriegelungseinrichtung 8 in einer Verriegelungsposition dargestellt. Sie weist ein stiftförmiges Sperrelement 10 auf, welches mit einem Betätigungselement 12 gekoppelt ist. Das Betätigungselement 12 bildet einen schwenkbar gelagerten Kniehebel und weist einen ersten Arm 13 und einen mit dem ersten Arm 13 in einem 90° Winkel 15 starr gekoppelten zweiten Arm 14 auf, der über ein Gelenk 19 mit dem Sperrelement 10 gekoppelt ist. Das Gelenk 19 besteht aus einer ovalen Öffnung in dem zweiten Arm 14 und einem Stift, der in dem Sperrelement 10 angeordnet ist und durch die ovale Öffnung ragt. Er ermöglicht eine Vorwärts- und Rückwärtsbewegung des Sperrelements 10, während das Betätigungselement 12 dabei um einen Drehpunkt 23 zwischen dem ersten Arm 13 und dem zweiten Arm 14 gedreht wird.

Ein Federelement 9, welches zwischen der Brüheinheit 2 und dem Sperrelement 10 angeordnet ist, drückt das Sperrelement 10 von der Brüheinheit 2 weg. Es drückt das Sperrelement 10 in Richtung einer Servicetüre 6 , welches in dem Gehäuse 5 der Heißgetränkezubereitungsvorrichtung 1 als bewegliches Gehäuseelement angeordnet ist. Das Sperrelement 10 ist längsverschieblich in einer Führung 20 geführt und greift in eine entsprechend dimensionierte Ausnehmung 11 in der Servicetüre 6 ein. Durch Koppelung über das Gelenk 19 spannt das Federelement 9 auch das Betätigungselement 12 in die Verriegelungsposition vor.

Es ist in Figur 1 zu erkennen, dass das Betätigungselement 12 bzw. sein erster Arm 13 durch die Brüheinheit 2 nicht betätigt wird, wenn die Brüheinheit 2 in ihrer Betriebsposition 4 ist. In der Betriebsposition 4 kann die Brüheinheit 2 z. B. Kaffeepulver aufnehmen, verdichten und danach mit heißem Wasser aufbrühen. Um zu verhindern, dass während des Betriebs ein Benutzer das Gehäuse 5 die Servicetüre 6 öffnet, ist die Verriegelungseinrichtung 8 selbstsperrend ausgeführt. Folglich bewegt sich die Verriegelungseinrichtung 8 automatisch in die Verriegelungsposition, in welcher ein Öffnen der Servicetüre 6 durch den Stift 10, der in die Ausnehmung 11 eingreift, verhindert wird.

In Figur 1 ist die Bewegungsrichtung der Servicetür 6 durch einen Pfeil P gekennzeichnet, der quer zu der Achse des Stifts 10 liegt. Die Servicetüre 6 ist folglich als Schiebetür ausgebildet. Die Servicetüre 6 kann alternativ auch als Schwingtüre oder dergleichen ausgebildet sein. Der Stift 10 ist dabei insbesondere im Wesentlichen quer zu der Bewegungsrichtung der Servicetüre 6 angeordnet, um deren Bewegung effektiv zu unterbinden.

Das Sperrelement 10 kann alternativ auch Haken-förmig ausgebildet sein und in eine Ösen-artige Ausnehmung 11 der Servicetüre 6 eingreifen. In solch einer Ausführungsform kann die Anordnung des Sperrelements 10 zu der Bewegungsrichtung der Servicetüre 6 flexibler gestaltet werden.

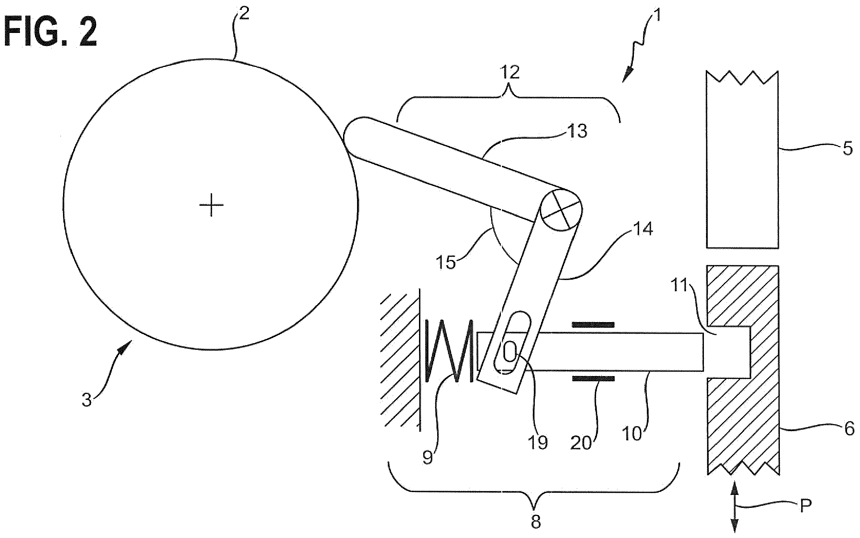

Figur 2 zeigt die Heißgetränkezubereitungsvorrichtung 1 der Fig. 1, bei welcher sich die Brüheinheit 2 in ihrer Ruheposition 3 befindet.

Es ist in Figur 2 zu erkennen, dass der erste Arm 13 durch die Brüheinheit nach oben gedrückt wird. Dadurch wird der zu dem ersten Arm 13 im 90°-Winkel angeordnete zweite Arm 14 ebenfalls ausgelenkt, sodass der Stift 10 entgegen der Kraft des Federelements 9 aus der Ausnehmung 11 der Servicetür 6 herausgezogen wird. Durch das Herausziehen des Stifts 10 wird die Servicetür 6 freigegeben und sie kann z.B. zur Reinigung der Brüheinheit 2 geöffnet werden.

Die Brüheinheit 2 verschwenkt üblicherweise für jeden Brühvorgang bzw. für jeden Getränkebezug zwischen der Ruheposition 3 und der Betriebsposition 4Ein Vergleich der Figuren 1 und 2 zeigt deutlich, wie mit Hilfe der Erfindung auf sehr einfache Art eine rein mechanische Sicherung der Servicetür 6 ausgeführt werden kann. Zur Umsetzung der Erfindung ist es ferner nicht notwendig, den üblichen Ablauf eines Brühvorgangs bzw. die Mechanik der Brüheinheit 2 anzupassen, da die bereits vorhandene Bewegung der Brüheinheit 2 genutzt wird, um die Verriegelungseinrichtung 8 zu betätigen.

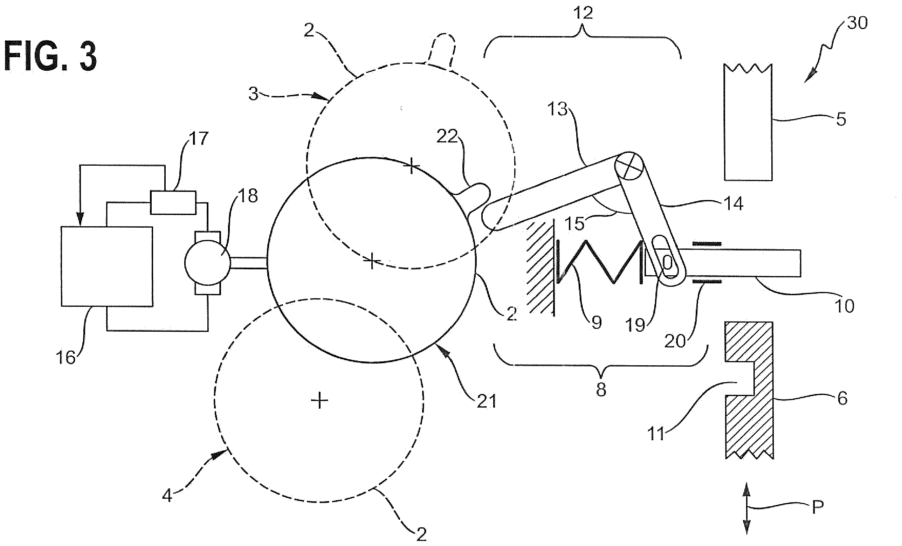

Figur 3 zeigt eine weitere Ausführungsform einer Heißgetränkezubereitungsvorrichtung 30. Sie unterscheidet sich von der Heißgetränkezubereitungsvorrichtung 1 der Figuren 1 und 2 durch einen als Elektromotor 18 ausgebildeten Aktor 18, der die Bewegung der Brüheinheit 2 antreibt. Der Elektromotor 18 ist ferner mit einer Steuereinrichtung 16 gekoppelt, welche den Elektromotor 18 steuert. In den Steuerleitungen zwischen der Steuereinrichtung 16 und dem Elektromotor 18 ist ein Stromsensor 17 angeordnet, mit dessen Hilfe die Steuereinrichtung 16 den Motorstrom des Elektromotors 18 erfassen kann. Schließlich weist die Brüheinheit 2 der Figur 3 einen Zapfen 22 auf, der derart an der Brüheinheit 2 angeordnet ist, dass er die Position des ersten Arms 13 kreuzt, wenn sich die Verriegelungseinrichtung 8 in einer dritten Position, nämlich einer Blockadeposition gemäß Figur 3 befindet.

In der dritten Position der Verriegelungseinrichtung 8, die zwischen der Verriegelungsposition gemäß Figur 1 und der Freigabeposition gemäß Figur 2 liegt, wird der Stift 10 durch die Federeinrichtung 9 weiter in Richtung der Servicetür 6 gedrückt, als in der ersten Position bzw. Verriegelungsposition. Dies ist nur möglich, wenn die Servicetür 6 geöffnet ist, da der Stift 10 sonst an ihr Anschlägt.

Da, wie in Figur 3 gezeigt, der Zapfen 22 an dem ersten Arm 13 anschlägt, wenn sich die Verriegelungseinrichtung 8 in der dritten Position befindet, kann die Brüheinheit 2 nicht in die Betriebsposition 4 verfahren werden und wird durch den ersten Arm 13 in einer Zwischenposition 21 gehalten.

Die dritte Position bzw. die Blockadeposition der Verriegelungseinrichtung 8 dient folglich dazu zu verhindern, dass bei geöffneter Servicetür 6 ein Brühvorgang begonnen wird, bei welchem die Brüheinheit 2 z.B. mit einer heißen Flüssigkeit befüllt werden könnte.

Gleichzeitig erfüllt die Blockadeposition der Verriegelungseinrichtung 8 aber einen weiteren Zweck: Wird die Brüheinheit 2 entfernt, was nur bei geöffneter Servicetür 6 möglich ist, bewegt sich die Verriegelungseinrichtung 8 automatisch in die dritte Position. Wie in Figur 3 ersichtlich, steht der Stift 10 in den Bereich des Gehäuses 5 hinein, in welchem die Servicetür 6 liegt, wenn sie geschlossen ist. Der Stift 10 verhindert folglich ein Schließen der Servicetür 6, wenn sich die Verriegelungseinrichtung 8 in der dritten Position befindet. Sie verhindert folglich einerseits das Einleiten eines Getränkebezugs bei geöffneter Servicetür 6 und andererseits ein Schließen der Servicetür 6 bei entnommener Brüheinheit 2.

Wird die Bewegung der Brüheinheit 2 bei der Einleitung eines Getränkebezugs durch den ersten Arm 13 der Verriegelungseinrichtung 8 blockiert, wird ebenfalls die Bewegung bzw. Drehung des Elektromotors 18 blockiert. Solange dies durch die Steuereinrichtung 16 nicht erkannt wird, wird sie den Elektromotor 18 aber weiterhin ansteuern. In diesem Fall steigt der Strom durch den Elektromotor 18 stark an, da die Induktivitäten der Motorwicklungen nicht mehr als Widerstände fungieren, sondern lediglich der ohmsche Widerstand der Wicklungsdrähte wirksam ist.

Um einen solchen Zustand zu vermeiden bzw. zu beenden, kann die Steuereinrichtung 16 den Stromfluss durch den Elektromotor 18 mit dem Sensor 17 messen, um das Blockieren des Elektromotors 18 zu erkennen. Erkennt die Steuereinrichtung 16, dass der Elektromotor 18 beim Verfahren der Brüheinheit 2 in die Betriebsposition 4 blockiert wird, kann die Steuereinrichtung 16 den Elektromotor 18 stoppen oder die Bewegungsrichtung des Elektromotors 18 umkehren, sodass die Brüheinheit 2 zurück in die Ruheposition 3 verfährt.

Alternativ zu dem Stromsensor 17 kann die Steuereinrichtung 16 z. B. auch mit einem Mikroschalter oder einem anderen Sensor gekoppelt sein, welcher aktiviert wird, wenn die Brüheinheit 2 in der Betriebsposition 4 ist. Um ein Blockieren der Brüheinheit 2 in der Zwischenposition 21 zu erkennen, kann die Steuereinrichtung 16 z. B. die Zeit erfassen, welche seit dem Beginn der Bewegung der Brüheinheit 2 vergangen ist. Überschreitet die erfasste Zeit einen vorgegebenen Schwellwert, kann die Steuereinrichtung 16 ebenfalls den Elektromotor 18 stoppen oder die Bewegungsrichtung des Elektromotors 18 umkehren, sodass die Brüheinheit 2 zurück in die Ruheposition 3 verfährt.

Die vorliegende Erfindung wurde anhand bevorzugter Ausführungsformen vorstehend beschrieben. Auf diese ist die vorliegende Erfindung aber nicht beschränkt. Vielmehr kann die vorliegende Erfindung auf vielfältige Art und Weise modifiziert werden, ohne vom Kern der Erfindung abzuweichen.

Insbesondere sei bemerkt, dass die oben genannten konkreten Ausführungsformen des beweglichen Gehäuseelements 6, der Verriegelungseinrichtung 8, der Federeinrichtung 9 und dergleichen lediglich beispielhaft sind und je nach Ausführung an die jeweiligen mechanischen und geometrischen Gegebenheiten der Heißgetränkezubereitungsvorrichtung 1; 30 angepasst werden können.

### Bezugszeichenliste

- 1; 30: Heißgetränkezubereitungsvorrichtung
- 2: bewegliches Funktionselement
- 3: Ruheposition
- 4: Betriebsposition
- 5: Gehäuse
- 6: bewegliches Gehäuseelement
- 8: Verriegelungseinrichtung
- 9: Federeinrichtung
- 10: Sperrelement
- 11: Ausnehmung
- 12: Betätigungselement
- 13: erster Arm
- 14: zweiter Arm
- 15: Winkel
- 16: Steuereinrichtung
- 17: Sensor
- 18: Aktor
- 19: Gelenk
- 20: Führung
- 21: Zwischenposition
- 22: Zapfen
- 23: Drehpunkt

## Patentansprüche

1. Heißgetränkezubereitungsvorrichtung (1; 30), insbesondere Kaffeevollautomat,
- mit einem beweglichen Funktionselement (2), welches eine Ruheposition (3) und eine Betriebsposition (4) aufweist;
- mit einem Gehäuse (5), welches zumindest das bewegliche Funktionselement (2) umschließt;
- mit einem beweglichen Gehäuseelement (6), welches in einer Außenwand des Gehäuses (5) angeordnet ist und dazu ausgebildet ist, in einem ersten, geöffneten Zustand einen Zugang zu dem beweglichen Funktionselement (2) freizugeben und in einem zweiten, geschlossenen Zustand den Zugang zu dem beweglichen Funktionselement (2) zu versperren; und
- mit einer Verriegelungseinrichtung (8), welche dazu ausgebildet ist, in einer ersten Position das bewegliche Gehäuseelement (6) zu verriegeln und in einer zweiten Position das bewegliche Gehäuseelement (6) freizugeben, und welche derart gegenüber dem beweglichen Funktionselement (2) angeordnet ist, dass das bewegliche Funktionselement (2) in der Ruheposition (3) die Verriegelungseinrichtung (8) in die zweite Position bewegt **dadurch gekennzeichnet, dass**
das Öffnen des beweglichen Gehäuseelements (6) unterbunden ist, wenn sich das bewegliche Funktionselement (2) außerhalb der Ruheposition (3) befindet.

2. Heißgetränkezubereitungsvorrichtung (1; 30) nach Anspruch 1, wobei die Verriegelungseinrichtung (8) eine Federeinrichtung (9) aufweist, welche dazu ausgebildet ist, die Verriegelungseinrichtung (8) in die erste Position zu bewegen, wenn sich das bewegliche Funktionselement (2) außerhalb der Ruheposition (3) befindet.

3. Heißgetränkezubereitungsvorrichtung (1; 30) nach einem der vorherigen Ansprüche 1 und 2, wobei die Verriegelungseinrichtung (8) dazu ausgebildet ist, in einer dritten Position (Blockadeposition) eine Bewegung des beweglichen Funktionselements (2) von der Ruheposition (3) in die Betriebsposition (4) zu blockieren und/oder eine Bewegung des beweglichen Gehäuseelements (6) von dem ersten, geöffneten Zustand in den zweiten, geschlossenen Zustand zu blockieren.

4. Heißgetränkezubereitungsvorrichtung (1; 30) nach den Ansprüchen 2 und 3, wobei die Federeinrichtung (9) dazu ausgebildet ist, die Verriegelungseinrichtung (8) in die dritte Position zu bewegen, wenn sich das bewegliche Gehäuseelement (6) in dem ersten, geöffneten Zustand befindet und sich das bewegliche Funktionselement (2) außerhalb der Ruheposition (3) befindet.

5. Heißgetränkezubereitungsvorrichtung (1; 30) nach Anspruch 4, wobei die Verriegelungseinrichtung (8) ein Sperrelement (10) aufweist, welches dazu ausgebildet ist, in der ersten Position eine Bewegung des beweglichen Gehäuseelements (6) in den ersten, geöffneten Zustand zu verhindern, und welches dazu ausgebildet ist, in der dritten Position eine Bewegung des beweglichen Gehäuseelements (6) in den zweiten, geschlossenen Zustand zu verhindern, wobei das Sperrelement (10) dazu ausgebildet ist, in der zweiten Position eine Bewegung des beweglichen Gehäuseelements (6) von dem ersten, geöffneten Zustand in den zweiten, geschlossenen Zustand und umgekehrt freizugeben.

6. Heißgetränkezubereitungsvorrichtung (1; 30) nach Anspruch 5, wobei die Verriegelungseinrichtung (8) ein Betätigungselement (12) aufweist, welches einen ersten Arm (13) und einen mit dem ersten Arm (13) in einem vorgegebenen Winkel (15), insbesondere einem 90° Winkel, gekoppelten zweiten Arm (14) aufweist, wobei der zweite Arm (14) gelenkig mit dem Sperrelement (10) gekoppelt ist und wobei der erste Arm (13) derart angeordnet ist, dass er bei einer Bewegung des beweglichen Funktionselements (2) in die Ruheposition (3) derart betätigt wird, dass durch den zweiten Arm (14) das Sperrelement (10) in die zweite Position bewegt wird.

7. Heißgetränkezubereitungsvorrichtung (1; 30) nach einem der vorherigen Ansprüche,
- mit einem Sensor (17), welcher dazu ausgebildet ist, zu erkennen, ob sich das bewegliche Funktionselement (2) in der Betriebsposition (4) befindet; und
- mit einer Steuereinrichtung (16), welche mit dem Sensor (17) gekoppelt ist, und dazu ausgebildet ist, einen Getränkebezug nur dann freizugeben, wenn sich das bewegliche Funktionselement (2) in der Betriebsposition (4) befindet.

8. Heißgetränkezubereitungsvorrichtung (1; 30) nach Anspruch 7,
- mit einem elektrisch steuerbaren Aktor (18), welcher dazu ausgebildet ist, das bewegliche Funktionselement (2) von der Ruheposition (3) in die Betriebsposition (4) zu bewegen und umgekehrt,
wobei die Steuervorrichtung (16) mit dem Aktor (18) und dem Sensor (17) gekoppelt ist und dazu ausgebildet ist:
- den Aktor (18) derart anzusteuern, dass das bewegliche Funktionselement (2) von der Ruheposition (3) in die Betriebsposition (4) bewegt wird, um einen Getränkebezug einzuleiten;
- basierend auf von dem Sensor (17) erfassten Größen zu detektieren, ob das bewegliche Funktionselement (2) die Betriebsposition (4) erreicht; und
- einen Getränkebezug zu beenden, wenn das bewegliche Funktionselement (2) die Betriebsposition (4) nicht erreicht.

9. Heißgetränkezubereitungsvorrichtung (1; 30) nach einem der vorherigen Ansprüche, mit einer Brüheinheit, insbesondere einer Spindelbrüheinheit, als beweglichem Funktionselement (2) und/oder mit einer Servicetür als beweglichem Gehäuseelement (6).

## Claims

1. Hot beverage preparation apparatus (1; 30), in particular fully automatic coffee maker,
- with a mobile functional element (2), which has a rest position (3) and an operating position (4);
- with a housing (5), which at least encloses the mobile functional element (2);
- with a mobile housing element (6), which is arranged in an outer wall of the housing (5) and is embodied to enable access to the mobile functional element (2) in a first, open state and to block access to the mobile functional element (2) in a second, closed state; and
- with a locking device (8), which is embodied to lock the mobile housing element (6) in a first position and to release the mobile housing element (6) in a second position, and which is so arranged with respect to the mobile functional element (2) such that the mobile functional element (2), in the rest position (3), moves the locking device (8) into the second position,
**characterised in that**
the opening of the mobile housing element (6) is prevented when the mobile functional element (2) is located outside the rest position (3).

2. Hot beverage preparation apparatus (1; 30) according to claim 1, wherein the locking device (8) has a spring device (9), which is embodied to move the locking device (8) into the first position when the mobile functional element (2) is located outside the rest position (3).

3. Hot beverage preparation apparatus (1; 30) according to one of the preceding claims 1 and 2, wherein the locking device (8) is embodied, in a third position (blocking position), to block a movement of the mobile functional element (2) from the rest position (3) into the operating position (4) and/or to block a movement of the mobile housing element (6) from the first, open state into the second, closed state.

4. Hot beverage preparation apparatus (1; 30) according to claims 2 and 3, wherein the spring device (9) is embodied to move the locking device (8) into the third position, when the mobile housing element (6) is located in the first, open state and the mobile functional element (2) is located outside the rest position (3).

5. Hot beverage preparation apparatus (1; 30) according to claim 4, wherein the locking device (8) has a blocking element (10), which is embodied, in the first position, to prevent a movement of the mobile housing element (6) into the first, open state, and which is embodied, in the third position, to prevent a movement of the mobile housing element (6) into the second, closed state, wherein the blocking element (10) is embodied, in the second position, to enable a movement of the mobile housing element (6) from the first, open state into the second, closed state and vice versa.

6. Hot beverage preparation apparatus (1; 30) according to claim 5, wherein the locking device (8) has an actuating element (12), which has a first arm (13) and a second arm (14) coupled to the first arm (13) at a predefined angle (15), in particular a 90° angle, wherein the second arm (14) is coupled to the blocking element (10) in an articulated manner and wherein the first arm (13) is arranged such that, when the mobile functional element (2) is moved into the rest position (3), the first arm (13) is actuated such that the blocking element (10) is moved into the second position by the second arm (14).

7. Hot beverage preparation apparatus (1; 30) according to one of the preceding claims,
- with a sensor (17) which is embodied to identify whether the mobile functional element (2) is located in the operating position (4); and
- with a control device (16), which is coupled to the sensor (17) and is embodied to only enable the preparation of a beverage when the mobile functional element (2) is located in the operating position (4).

8. Hot beverage preparation apparatus (1; 30) according to claim 7,
- with an electrically controllable actuator (18), which is embodied to move the mobile functional element (2) from the rest position (3) into the operating position (4) and vice versa,
wherein the control apparatus (16) is coupled to the actuator (18) and the sensor (17) and is embodied:
- to actuate the actuator (18) such that the mobile functional element (2) is moved from the rest position (3) into the operating position (4), in order to trigger a preparation of a beverage;
- to detect, based on variables acquired by the sensor (17), whether the mobile functional element (2) reaches the operating position (4); and
- to finish a preparation of a beverage when the mobile functional element (2) does not reach the operating position (4).

9. Hot beverage preparation apparatus (1; 30) according to one of the preceding claims, with a brewing unit, in particular a spindle brewing unit, as the mobile functional element (2) and/or with a service door as the mobile housing element (6).

## Revendications

1. Dispositif de préparation de boissons chaudes (1 ; 30), notamment machine à café entièrement automatique,
- comprenant un élément fonctionnel (2) déplaçable, lequel présente une position de repos (3) et une position de fonctionnement (4) ;
- comprenant un boîtier (5) qui entoure au moins l'élément fonctionnel (2) déplaçable ;
- comprenant un élément de boîtier (6) déplaçable, lequel est disposé dans une paroi extérieure du boîtier (5) et est réalisé, dans un premier état ouvert, pour libérer un accès vers l'élément fonctionnel (2) déplaçable et, dans un deuxième état fermé, pour bloquer l'accès vers l'élément fonctionnel (2) déplaçable ; et
- comprenant un dispositif de verrouillage (8) lequel est réalisé, dans une première position, pour verrouiller l'élément de boîtier (6) déplaçable et, dans une deuxième position, pour libérer l'élément de boîtier (2) déplaçable, et lequel est disposé de telle manière par rapport à l'élément fonctionnel (2) déplaçable que l'élément fonctionnel (2) déplaçable, en position de repos (3), déplace le dispositif de verrouillage (8) en la deuxième position,
**caractérisé en ce que**
l'ouverture de l'élément de boîtier (6) déplaçable est empêchée lorsque l'élément fonctionnel (2) déplaçable se trouve hors de la position de repos (3).

2. Dispositif de préparation de boissons chaudes (1 ; 30) selon la revendication 1, le dispositif de verrouillage (8) présentant un dispositif à ressort (9) qui est réalisé pour déplacer le dispositif de verrouillage (8) en la première position lorsque l'élément fonctionnel (2) déplaçable se trouve hors de la position de repos (3).

3. Dispositif de préparation de boissons chaudes (1 ; 30) selon l'une quelconque des revendications 1 et 2, le dispositif de verrouillage (8) étant réalisé, dans une troisième position (position de blocage), pour bloquer un mouvement de l'élément fonctionnel (2) déplaçable de la position de repos (3) en la position de fonctionnement (4) et/ou pour bloquer un mouvement de l'élément de boîtier (6) déplaçable du premier état ouvert en le deuxième état fermé.

4. Dispositif de préparation de boissons chaudes (1 ; 30) selon les revendications 2 et 3, le dispositif à ressort (9) étant réalisé pour déplacer le dispositif de verrouillage (8) en la troisième position lorsque l'élément de boîtier (6) déplaçable se trouve dans le premier état ouvert et que l'élément fonctionnel (2) se trouve hors de la position de repos (3).

5. Dispositif de préparation de boissons chaudes (1 ; 30) selon la revendication 4, le dispositif de verrouillage (8) présentant un élément de blocage (10) lequel est réalisé, dans la première position, pour empêcher un mouvement de l'élément de boîtier (6) déplaçable en le premier état ouvert, et lequel est réalisé, dans la troisième position, pour empêcher un mouvement de l'élément de boîtier (6) déplaçable en le deuxième état fermé, l'élément de blocage (10) étant réalisé, dans la deuxième position, pour libérer un mouvement de l'élément de boîtier (6) déplaçable du premier état ouvert en le deuxième état fermé et vice versa.

6. Dispositif de préparation de boissons chaudes (1 ; 30) selon la revendication 5, le dispositif de verrouillage (8) présentant un élément d'actionnement (12) lequel présente un premier bras (13) et un deuxième bras (14) couplé au premier bras (13) dans un angle (15) prédéfini, notamment dans un angle de 90°, le deuxième bras (14) étant couplé à l'élément de blocage (10) de manière articulée et le premier bras (13) étant disposé de manière à ce qu'il soit actionné lors d'un mouvement de l'élément fonctionnel (2) déplaçable en la position de repos (3) de façon à ce que l'élément de blocage (10) soit déplacé en la deuxième position par le deuxième bras (14).

7. Dispositif de préparation de boissons chaudes (1 ; 30) selon l'une quelconque des revendications précédentes,
- comprenant un capteur (17) qui est réalisé pour identifier si l'élément fonctionnel (2) déplaçable se trouve dans la position de fonctionnement (4) ; et
- comprenant un dispositif de commande (16) qui est couplé au capteur (17) et est réalisé pour libérer une consommation de boisson seulement lorsque l'élément fonctionnel (2) déplaçable se trouve dans la position de fonctionnement (4).

8. Dispositif de préparation de boissons chaudes (1 ; 30) selon la revendication 7,
- comprenant un actionneur (18) commandable électriquement, lequel est réalisé pour déplacer l'élément fonctionnel (2) déplaçable de la position de repos (3) en la position de fonctionnement (4) et vice versa,
le dispositif de commande (16) étant couplé à l'actionneur (18) et au capteur (17) et étant réalisé :
- pour commander l'actionneur (18) de manière à ce que l'élément fonctionnel (2) déplaçable soit déplacé de la position de repos (3) en la position de fonctionnement (4) afin d'initier une consommation de boisson ;
- pour détecter, sur la base de grandeurs détectées par le capteur (17), si l'élément fonctionnel (2) déplaçable atteint la position de fonctionnement (4) ; et
- pour achever une consommation de boisson lorsque l'élément fonctionnel (2) déplaçable n'atteint pas la position de fonctionnement (4).

9. Dispositif de préparation de boissons chaudes (1 ; 30) selon l'une quelconque des revendications précédentes, comprenant une unité de percolation, notamment une unité de percolation à broche, en tant qu'élément fonctionnel (2) déplaçable et/ou comprenant une porte de service en tant qu'élément de boîtier (6) déplaçable.
